# EUROPÄISCHE PATENTSCHRIFT

(11) **EP 3 111 108 B1**
(45) Veröffentlichungstag und Bekanntmachung des Hinweises auf die Patenterteilung: **10.04.2019**
(21) Anmeldenummer: 15710097.5
(22) Anmeldetag: 24.02.2015
(51) Int. Cl.: F16G 15/02

(54) **BLOCKSCHLOSS MIT FREISTICH**
BLOCK CONNECTING LINK HAVING AN UNDERCUT
MAILLON BLOQUÉ À RAINURE DE DÉGAGEMENT

(30) Priorität: 28.02.2014 DE 202014100928 U
(43) Veröffentlichungstag der Anmeldung: 04.01.2017
(73) Patentinhaber: Thiele GmbH & Co. KG, 58640 Iserlohn (DE)
(72) Erfinder: HAGEN, Andreas, 58802 Balver (DE)
(74) Vertreter: Osterhoff, Utz
(86) Internationale Anmeldenummer: PCT/DE2015/100077
(87) Internationale Veröffentlichungsnummer: WO 2015/127927

(56) Entgegenhaltungen:
- DE-C1- 4 333 261
- DE-U1-202004 009 459

## Beschreibung

Die vorliegende Erfindung betrifft ein Kettenschloss gemäß den Merkmalen im Oberbegriff von Patentanspruch 1.

Aus dem Stand der Technik ist es bekannt, Ketten zur Übertragung von Kräften, beispielsweise in Förderanlagen oder ähnlichem einzusetzen. Insbesondere kommen hierbei Rundstahlgliederketten zum Einsatz, wobei dann zur Verbindung zweier Ketten oder aber zur Verbindung der Enden einer Kette, ein jeweiliges Kettenschloss verwendet wird, das beispielsweise auch als Blockschloss bekannt ist. Insbesondere kommen solche Blockschlösser bei Durchmessern der einzelnen Rundstahlkettenglieder von 30 bis 80 mm zum Einsatz.

Durch die DE 197 43 025 C1 zählt ein Blockschloss für Rundstahlketten zum Stand der Technik, das zwei identische Schlosshälften aufweist, die jeweils einen im wesentlichen rechteckigen Querschnitt mit einer geraden Rückenfläche, ebenen Seitenflächen, konvex gekrümmten Stirnflächen und neben der Mittelquerebene liegende, der mittleren Teilungsebene zugewandte Aufnahmen für Rundkettenglieder aufweisen. An einem Ende jeder Schlosshälfte ist ein Vorsprung mit einer zur benachbarten Stirnfläche vorstehenden Konsole und am anderen Ende ein Vorsprung mit einer an die Konsolen angepassten Nische vorgesehen. An dem Vorsprung mit der Nische steht ein Zapfen vor, der in eine Tasche neben dem Vorsprung mit der Konsole greift. Die Haupterstreckungsachsen der Konsolen, Nischen, Zapfen und Taschen verlaufen im Winkel zur Mittelquerebene. Zwischen den Aufnahmen jeder Schlosshälfte ist ein Stütznocken vorgesehen. Bei diesem Blockschloss tragen alle Verzapfungen zur Aufnahme der Längskräfte bei, wodurch eine hohe Bruchkraft und eine hohe Lastspielzahl erreicht wird. Es wurde jedoch festgestellt, dass die jeweils endseitig angeordneten Spannstifte, die durch Querbohrungen in den Zapfen getrieben sind, ebenfalls hohen Schubbeanspruchungen unterliegen. Andererseits soll auf eine Verriegelung an den Enden nicht verzichtet werden, damit sich die Schlosshälften im Belastungsfall nicht ohne weiteres aufspreizen können.

In der DE 20 2004 009 459 U1 wird ein Kettenschloss für Stahlgliederketten mit zwei gleichen, in drehsymmetrischer Anordnung zueinander in Längsrichtung zusammenfügbaren Schlossteilen beschrieben, wobei jedes Schlossteil einen Mittenstegansatz zum Ausbilden eines Mittensteges bei zusammengefügten Schlossteilen umfasst und wobei die endseitigen Bogenabschnitte jedes Schlossteils jeweils eines von zwei komplementär zueinander ausgebildeten Kupplungsgliedern bilden. Die gegenseitige Verriegelung der Schlosshälften erfolgt im Bereich des Mittenstegs durch Spannstifte, die in entsprechende Bohrungen eingesetzt werden. In den Endabschnitten sind jeweils hinterschnittene Verriegelungsstege ausgebildet, die in eine gegengleich konfigurierte Tasche der anderen Schlosshälfte fassen. Durch die Hinterschneidung an den Verriegelungsstegen bzw. der zur Aufnahme des Verriegelungsstegs vorgesehenen Tasche sind die Schlosshälften gegeneinander verriegelt. Der Verriegelungssteg bzw. die Verriegelungstasche übertragen die an dem Kettenschloss angreifenden Zugkräfte auf die jeweils andere Schlosshälfte, so dass den Verriegelungsstegen eine Doppelfunktion zukommt, da sie gleichzeitig verhindern, dass die Schlosshälften quer zur Längserstreckung voneinander gelöst werden können.

Aufgabe der vorliegenden Erfindung ist es bei aus dem Stand der Technik bekannten Kettenschlössern eine Bruchlaststeigerung zu erreichen, bei gleichzeitig einfacher Fertigungsmöglichkeit. Insbesondere sollen aufwendigere Fertigungsmethoden oder aber auf die Verwendung von kostenintensiveren Werkstoffen verzichtet werden.

Die zuvor genannte Aufgabe wird erfindungsgemäß bei einem Kettenschloss mit zwei Schlosshälften gemäß den Merkmalen im Patentanspruch 1 gelöst.

Vorteilhafte Ausführungsvarianten der vorliegenden Erfindung sind Gegenstand der abhängigen Patentansprüche.

Das Kettenschloss weist zwei Schlosshälften auf, wobei jede Schlosshälfte aus einem länglichen Körper mit endseitigem Kuppelabschnitt ausgebildet ist und die zwei Schlosshälften ineinander steckbar sind. Gegenüber dem jeweils länglichen Körper steht ein Verriegelungszapfen über und auf der dem Verriegelungszapfen gegenüberliegenden Seite des Körpers ist ein überstehender Nocken angeordnet, wobei der Nocken einer Schlosshälfte in eine Tasche an dem Verriegelungszapfen der gegenüberliegenden Schlosshälfte bei verriegeltem Kettenschloss formschlüssig zum Eingriff kommt, wobei an dem Kettenschloss angreifende Zugkräfte über den Nocken und die Tasche in die jeweils andere Schlosshälfte einleitbar sind. Erfindungsgemäß zeichnet sich das Kettenschloss dadurch aus, dass in der Tasche ein Freistich ausgebildet ist.

Der wesentliche Vorteil der Erfindung liegt darin, dass der Nocken, der in der Tasche formschlüssig zur Anlage kommt und hierüber Zugkräfte übertragbar sind, aufgrund des Freistiches nicht in einem Taschengrund bzw. Nutgrund mit einer Ecke bzw. Spitze die Kraft einleitet, sondern eine derart andere Spannungsverteilung realisiert wird, dass die übertragenen Zugkräfte von Nocken auf Tasche im Wesentlichen in einem Flächenanlagenbereich beider Teile übertragen werden und somit nicht in einem Eckbereich. Hierdurch ist eine Bruchlaststeigerung je nach geometrischer Dimensionierung sowie verwendeten Werkstoffen zwischen 5 und 10% möglich, gegenüber einem bekannten Kettenschloss bzw. Blockschloss ohne Freistich.

Es kann somit eine höhere Lebensdauer bzw. Belastbarkeit des Kettenschlosses erreicht werden, ohne den Einsatz eines kostenintensiveren Werkstoffes oder aber eines aufwendigen Herstellungsverfahren, beispielsweise eines weiteren Härten oder Vergüten des entsprechenden Kettenschlosses.

Im Rahmen der Erfindung ist die Tasche insbesondere derart ausgebildet, dass sie von einer Seite der Schlosshälfte zu der gegenüberliegenden Seite U-förmig oder V-förmig verläuft, wobei sich der Freistich über den Großteil, vorzugsweise die gesamte U-Form oder V-Form erstreckt. Zu den jeweiligen Seiten hin, kann die U-Form bzw. V-Form dann wiederum abflachen.

Im Rahmen der Erfindung können weitergehende, auf den Verriegelungszapfen über der Tasche liegende formschlüssige Koppelungen oder Verklinkungen zwischen Verriegelungszapfen sowie Ende des länglichen Körpers der gegenüberliegenden Schlosshälfte ausgebildet sein. Solche sind beispielsweise aus der DE 20 2006 006 731 U1 bekannt, deren Offenbarungsgehalt sowie technische Ausführungen hiermit vollständig aufgenommen werden.

Weiterhin besonders bevorzugt ist die Tasche von dem Verriegelungszapfen zu dem länglichen Körper im Mittellängsschnitt der Schlosshälfte durch zwei Geraden ausgebildet, wobei die zwei Geraden in einem Taschengrund in einem Winkel von 60° bis 90°, insbesondere von 80° bis 88° und besonders bevorzugt von 83° bis 86° zueinander angeordnet sind, wobei der Freistich in dem Taschengrund ausgebildet ist. Zunächst ist eine erste Gerade im Wesentlichen in Richtung der Mittellängsachse des länglichen Körpers ausgebildet, wobei dann die zweite Gerade, welche in Richtung zu dem Verriegelungszapfen verläuft, in einem Winkel bevorzugt kleiner 90° zu diesem angeordnet. Hierdurch wird erreicht, dass die zwei Schlosshälften unter Belastung aufeinander zu bewegt werden. Durch den Freistich im Taschengrund wird wiederum hier eine Krafteinleitung sowie Spannungskonzentration vermieden, was zu der erfindungsgemäßen Bruchlaststeigerung führt.

Weiterhin bevorzugt weist der Freistich einen Radius r1 auf, wobei der Radius r1 in einem Längenbereich von 1 mm bis 6 mm und bevorzugt von 2,5 mm bis 4,5 mm ausgebildet ist. Der Radius r1 erstreckt sich maßgeblich in Richtung zu dem Verriegelungszapfen und geht dann fließend in die Gerade zu dem länglichen Körper über. Im Rahmen der Erfindung kann der Radius des Freistiches jedoch optional auch unterhalb der Geraden des länglichen Körpers ausgebildet sein, so dass er zumindest abschnittsweise mit in den Bereich des länglichen Körpers hineinragend ausgebildet ist.

Weiterhin besonders bevorzugt ist von dem oberen Ende des Verriegelungszapfens kommend ein Radius r2 ausgebildet, wobei der Radius r1 und der Radius r2 gegenläufig ausgebildet sind. Der Radius r2 ist dazu besonders bevorzugt größer 0 mm und kleiner gleich dem 0,3-fachen des Radius r1 ausgebildet.

Weiterhin besonders bevorzugt ragt der Radius r1 mit einer Tiefe in Richtung des Verriegelungszapfens hinein, wobei die Tiefe bevorzugt größer 0 mm und kleiner gleich dem Radius r1, insbesondere kleiner gleich dem 0,3-fachen des Radius r1 ausgebildet ist. Optional wäre es im Rahmen der Erfindung auch möglich, wie bereits oben beschrieben, dass der Radius r1 auch mit einer Tiefe in Richtung zu dem länglichen Körper ausgebildet ist. Bevorzugt geht jedoch der Radius r1 zunächst direkt in die Gerade des länglichen Körpers über.

Weitere Vorteile, Merkmale, Eigenschaften und Aspekte der vorliegenden Erfindung sind Gegenstand der nachfolgenden Beschreibung. Bevorzugte Ausführungsvarianten werden in den schematischen Figuren dargestellt. Diese dienen dem einfachen Verständnis der Erfindung. Es zeigen:
- Figur 1: eine erfindungsgemäße Schlosshälfte in Seitenansicht,
- Figur 2: die erfindungsgemäße Schlosshälfte in Teilschnittansicht mit dem Freistich in der Tasche,
- Figur 3: eine Detailansicht des Freistiches gemäß Figur 2,
- Figur 4: eine Draufsicht im Längsschnitt gemäß der Schnittlinie G-G aus Figur 2
- Figur 5a und b: zwei perspektivische Ansichten der erfindungsgemäßen Schlosshälfte mit Freistich und
- Figur 6: ein erfindungsgemäßes Kettenschloss in Seitenansicht.

In den Figuren werden für gleiche oder ähnliche Bauteile dieselben Bezugszeichen verwendet, auch wenn eine wiederholte Beschreibung aus Vereinfachungsgründen entfällt.

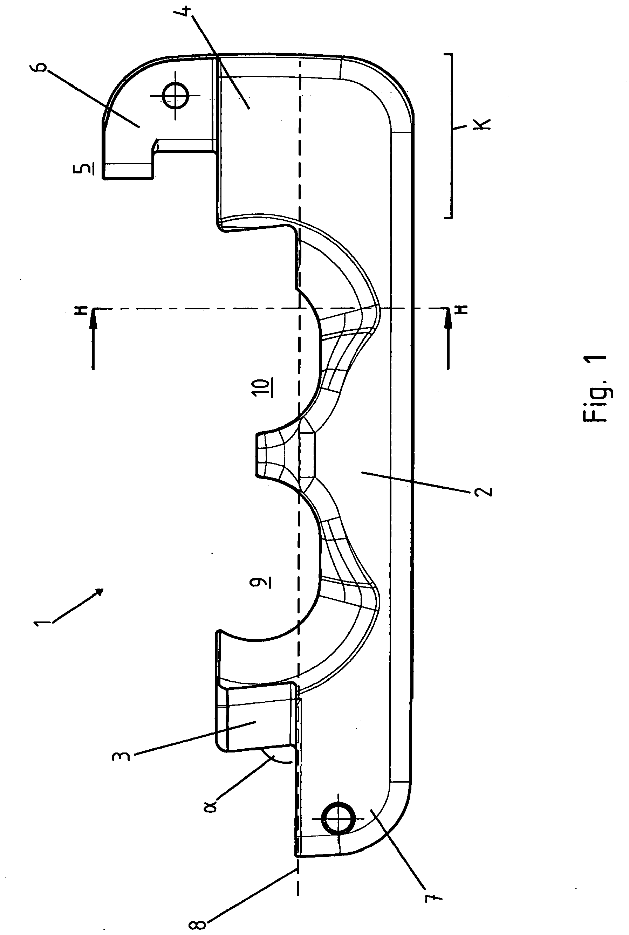

Figur 1 zeigt die erfindungsgemäße Schlosshälfte 1 eines Kettenschlosses 100 in einer Seitenansicht. Die Schlosshälfte 1 weist einen länglichen Körper 2 auf sowie einen gegenüber dem länglichen Körper 2 überstehender Nocken 3 und auf der gegenüberliegenden Seite des länglichen Körpers 2 gegenüber diesem überstehenden Verriegelungszapfen 4 in einen Kuppelabschnitt K. Dabei kommen bei zwei komplementär ausgebildeten Schlosshälften 1 die Seite des Nockens 3 einer Schlosshälfte 1 mit der Seite des Verriegelungszapfens 4 der gegenüberliegenden Schlosshälfte 1 formschlüssig zur Anlage.

An dem freien Ende 5 des Verriegelungszapfens 4 ist ein hakenförmiger Fortsatz 6 ausgebildet, der mit einem eingreifenden Ende 7 der gegenüberliegenden nicht näher dargestellten Schlosshälfte 1 zusätzlich formschlüssig verriegeln kann. Der Nocken 3 selbst weist gegenüber einer Längsachse 8 der Schlosshälfte 1 einen Winkel α ungleich 90°, insbesondere kleiner 90°, bevorzugt zwischen 80° bis 88°, besonders bevorzugt zwischen 83° und 86°, auf. Bei zwei miteinander verriegelten Schlosshälften 1 wird somit bei Übertragung einer Kraft in Richtung der Längsachse 8 ein Aufeinanderzubewegen der Schlosshälften 1 realisiert. Ferner weist die Schlosshälfte 1 zwei Halböffnungen 9, 10 auf, wobei bei zwei miteinander im Eingriff stehenden Schlosshälften 1 dann diese eine jeweilige Öffnung zur Aufnahme eines Rundstahlkettengliedes bilden.

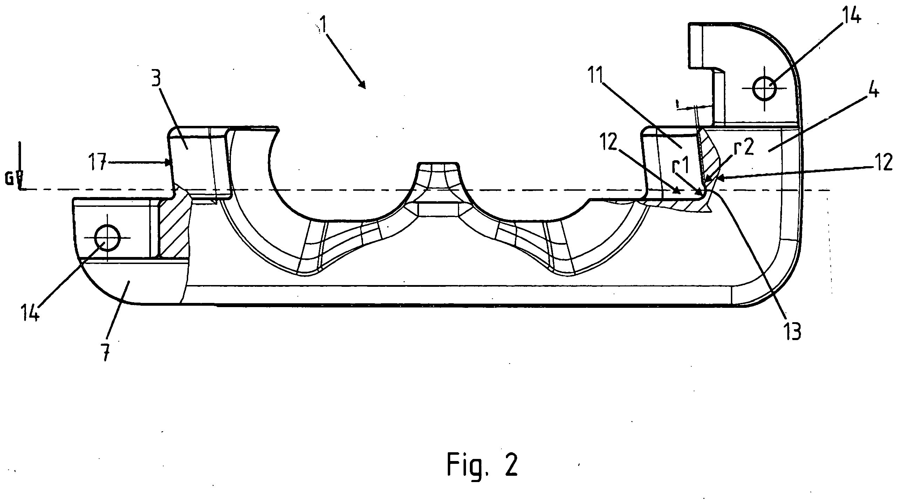

Figur 2 zeigt die erfindungsgemäße Schlosshälfte 1 in einer Teilschnittansicht. Gut zu erkennen ist, dass hier eine dem Nocken 3 korrespondierende Tasche 11 an dem Verriegelungszapfen 4 ausgebildet ist, wobei erfindungsgemäß in einem Taschengrund 12 ein Freistich 13 ausgebildet ist. Ferner ist in Figur 2 nochmals das eingreifende Ende 7 mit einer dem hakenförmigen Fortsatz 6 korrespondierenden inversen geometrischen Ausbildung zur weiteren Verklinkung bzw. zum weiteren formschlüssigen Eingriff dargestellt. Die zwei Schlosshälften 1 können dann über Verriegelungsbolzen, welche in die dargestellten Öffnungen 14 einsteckbar sind, im verriegelten Zustand lagegesichert werden.

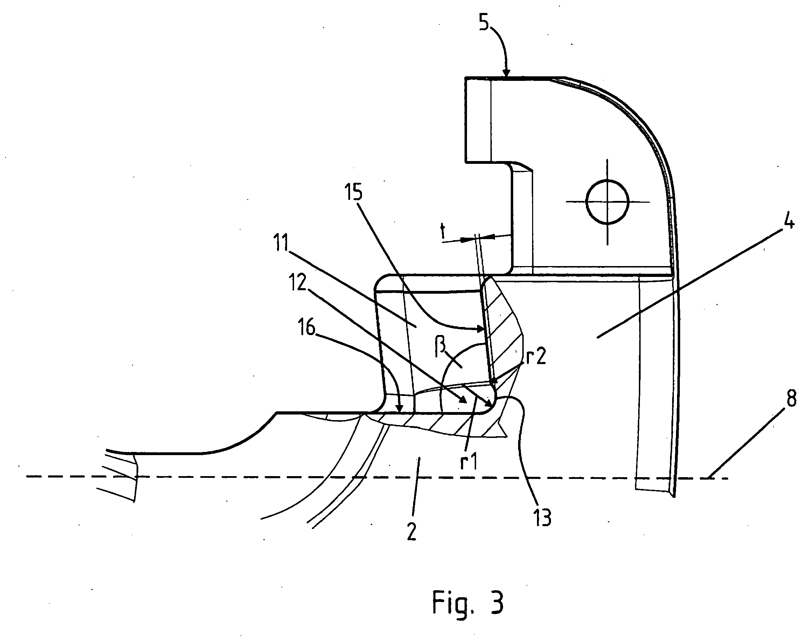

Figur 3 zeigt eine Detailansicht der Tasche 11 mit Taschengrund 12 und Freistich 13 gemäß Figur 2. Gut ersichtlich hieran ist, dass die Tasche 11 aus zwei Geraden 15, 16 besteht, wobei eine erste Gerade 15 am Verriegelungszapfen 4 ausgebildet ist und eine zweite Gerade 16 am länglichen Körper 2 bzw. dessen Längsachse 8 ausgebildet ist. Die zwei Geraden 15, 16 stehen in einem Winkel β zueinander und bilden somit den Taschengrund 12 aus. Der Winkel β beträgt dabei vorzugsweise 60° bis 90°, insbesondere zwischen 80° und 88° und besonders bevorzugt 83° bis 86° und ist weiterhin besonders bevorzugt korrespondierend zu dem Winkel α ausgebildet, so dass der entsprechende Nocken 3 und hier insbesondere eine Anlagenseite 17 des Nockens 3 in der Tasche 11 im umlaufenden Bereich der ersten Geraden 15 zur Anlage kommt. Weiterhin bevorzugt sind die Winkelbereiche von α und β gleich bzw. der Winkel α ist gleich dem Winkel β, so dass der Nocken 3 formschlüssig in der Tasche 11, und hier bevorzugt im Bereich an der Geraden 15, zur Anlage kommt.

Im Taschengrund 12 ist nunmehr der Freistich 13 ausgebildet, welcher mit einem Radius r1 ausgebildet ist. Der Freistich 13 ist derart ausgebildet, dass er sich insbesondere mit einer Tiefe t in Richtung zu dem Verriegelungszapfen 4 erstreckt und in besonders bevorzugter Ausführungsvariante nicht in Richtung zu der Längsachse 8 bzw. dem länglichen Körper 2 überstehend ausgebildet ist. Optional kann jedoch auch der Radius r1 sich in Richtung zu dem länglichen Körper 2 bzw. dessen Längsachse 8 ebenfalls erstrecken. Weiterhin ist von dem freien Ende 5 des Verriegelungszapfens 4 kommend zunächst ein Radius r2 gegenläufig zum Radius r1 ausgebildet, wobei der Radius r2 besonders bevorzugt größer 0 mm und kleiner gleich 0,3 mm x dem Radius r1 ist. Auch hierdurch wird die Spannungsverteilung zur Bruchlaststeigerung optimiert. Die Tiefe t mit der dann der Freistich 13 mit dem Radius r1 in Richtung zu dem Verriegelungszapfen 4 ausgebildet ist, ist besonders bevorzugt größer 0 mm und kleiner gleich dem Radius r1, insbesondere kleiner gleich dem 0,3-fachen des Radius r1 ausgebildet.

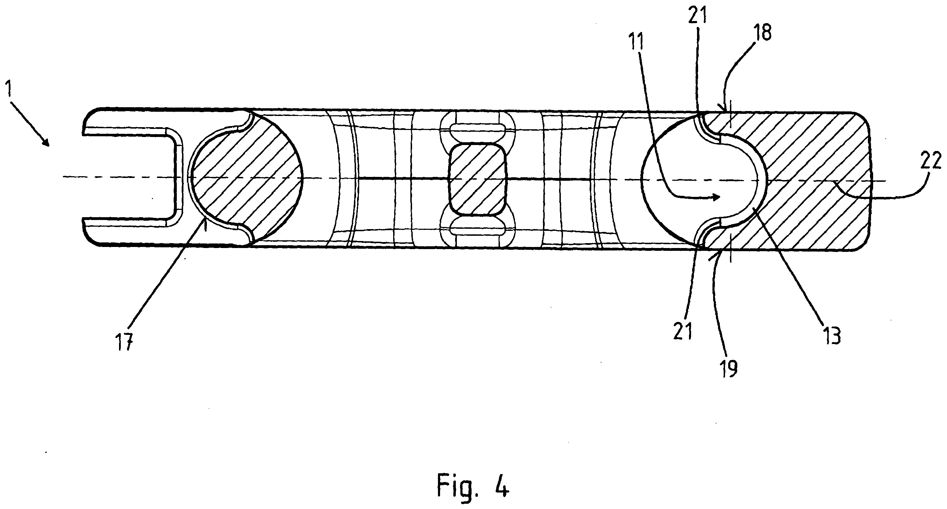

Weiterhin dargestellt gemäß Figur 4 ist eine Draufsicht des Längsschnittes gemäß der Schnittlinie G-G aus Figur 2. Hierin ist gut zu erkennen, dass die Tasche 11 sich von einer ersten Seite 18 der Schlosshälfte 1 zu der zweiten Seite 19 hin im Wesentlichen U- bzw. V-förmig erstreckt und bevorzugt an den Seiten 18, 19 ausläuft. Der Freistich 13 ist dann über den gesamten Verlauf der U-form bzw. V-Form konstant ausgebildet, so dass die Anlagenfläche des Nockens 3 sowie die damit verbundene Krafteinleitung den Spannungsverlauf im Übergang zwischen Verriegelungszapfen 4 und länglichem Körper 2 der korrespondierenden Schlosshälfte 1 optimiert ist. Maßgeblich beginnt der Freistich 13 ab einem Übergang 21, wobei der Freistich 13 dann in einer bevorzugten Ausführungsvariante einen konstanten Querschnitt aufweist, welcher beispielsweise in Figur 2 näher beschrieben ist. In einer alternativen Ausgestaltungsvariante ist der Freistich 13 von einer ersten Seite 18 und von einer zweiten Seite 19 jeweils beginnend zu der mit Mittellängsachse 22 hin zunehmend ausgebildet, so dass sich dann an der Mittellängsachse 22 der in Figur 3 dargestellte Querschnitt sowie entsprechende Radienverhältnisse ergeben. Der Freistich 13 kann daher bereits von der ersten Seite 18 sowie der zweiten Seite 19 aus direkt beginnend zunehmend ausgebildet werden, oder alternativ ab dem dargestellten Übergang 21 entsprechend zunehmend ausgebildet sein. Die Zunahme kann dabei progressiv, degressiv oder aber linear ausgebildet sein, so dass dann ein Maximum der Radienverhältnisse des Freistiches 13 gemäß Figur 3 im Bereich der Mittellängsachse 22 ausgebildet ist. Abhängig wird dies gewählt von der Geometrie der Tasche 11 selbst.

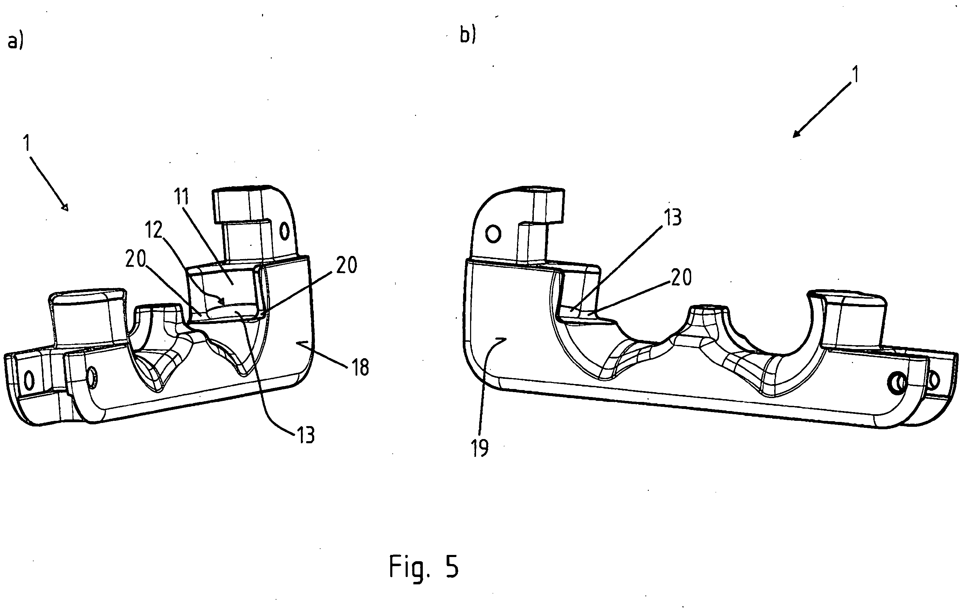

Figur 5a und b zeigen die jeweils erfindungsgemäße Schlosshälfte 1 in einer perspektivischen Ansicht. Gut erkennbar ist hier, dass der Verlauf der Tasche 11 von einer Seite 18 zur gegenüberliegenden Seite 19 jeweils an den Seitenbereichen 20 auslaufend ist. Der Freistich 13 erstreckt sich dann im Wesentlichen im Taschengrund 12 von der ersten Seite 18 zur zweiten Seite 19 der Schlosshälfte 1 verlaufend.

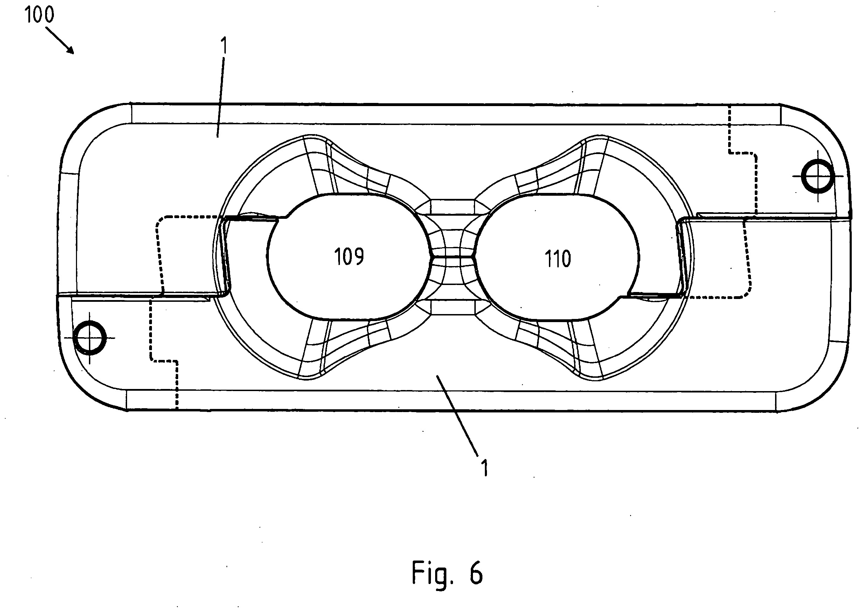

Figur 6 zeigt das erfindungsgemäße Kettenschloss 100 bestehend aus zwei ineinander gesetzten Schlosshälften 1. Zu erkennen sind die sich aus den Halböffnungen 9, 10 gemäß Figur 1 ergebenden Öffnungen 109, 110.

### Bezugszeichen:

- 1 -: Schlosshälfte
- 2 -: Körper
- 3 -: Nocken
- 4 -: Verriegelungszapfen
- 5 -: Ende zu 4
- 6 -: hakenförmiger Fortsatz
- 7 -: eingreifendes Ende
- 8 -: Längsachse zu 1
- 9 -: Halböffnung
- 10 -: Halböffnung
- 11 -: Tasche
- 12 -: Taschengrund
- 13 -: Freistich
- 14 -: Öffnung
- 15 -: erste Gerade zu 11 an 4
- 16 -: zweite Gerade zu 11 an 8
- 17 -: Anlagenseite zu 3
- 18 -: erste Seite zu 1
- 19 -: zweite Seite zu 1
- 20 -: Seitenbereich
- 21 -: Übergang
- 22 -: Mittellängsachse
- 100 -: Kettenschloss
- 109 -: Öffnung
- 110 -: Öffnung

- r1 -: Radius
- r2 -: Radius
- t -: Tiefe
- α -: Winkel zu 3
- β -: Winkel zu 15 und 16
- K -: Kuppelabschnitt

## Patentansprüche

1. Kettenschloss (100) mit zwei Schlosshälften (1), wobei jede Schlosshälfte (1) aus einem länglichen Körper (2) mit endseitigem Kuppelabschnitt (K) ausgebildet ist, gegenüber dem ein Verriegelungszapfen (4) übersteht und auf der dem Verriegelungszapfen (4) gegenüberliegenden Seite des Körpers (2) ein überstehender Nocken (3) angeordnet ist, wobei der Nocken (3) einer Schlosshälfte (1) in eine Tasche (11) an dem Verriegelungszapfen (4) der gegenüberliegenden Schlosshälfte (1) formschlüssig zum Eingriff kommt, wobei an dem Kettenschloss (100) angreifende Zugkräfte über den Nocken (3) in die Tasche (11) der jeweils anderen Schlosshälfte (1) einleitbar sind, **dadurch gekennzeichnet, dass** in der Tasche (11) ein Freistich (13) ausgebildet ist.

2. Kettenschloss nach Anspruch 1, **dadurch gekennzeichnet, dass** die Tasche (11) von einer Seite (18) der Schlosshälfte (1) zu der gegenüberliegenden Seite (19) U-förmig oder V-förmig verläuft, wobei sich der Freistich (13) über die gesamte U-Form oder V-Form erstreckt oder der Freistich (13) von jeder Seite (18, 19) kommend zu einer Mittellängsachse (22) hin zunehmend ausgebildet ist.

3. Kettenschloss nach Anspruch 1, **dadurch gekennzeichnet, dass** der Freistich (13) einen Radius (r1) aufweist, mit dem er in Richtung des Verriegelungszapfens (4) ausgebildet ist, wobei der Radius (r1) von 1 mm bis 6 mm, bevorzugt von 2,5 mm bis 4,5 mm ausgebildet ist.

4. Kettenschloss nach Anspruch 3, **dadurch gekennzeichnet, dass** von einem oberen Ende (5) des Verriegelungszapfens (4) kommend ein Radius (r2) ausgebildet ist, der dann in den gegenläufigen Radius (r1) übergeht, wobei der Radius (r2) größer 0 mm ist und kleiner gleich 0,3 x Radius (r1).

5. Kettenschloss nach Anspruch 3 oder 4, **dadurch gekennzeichnet, dass** der Radius (r1) mit einer Tiefe (t) in Richtung des Verriegelungszapfens (4) ausgebildet ist, wobei die Tiefe (t) bevorzugt größer 0 mm und kleiner gleich dem Radius (r1), insbesondere kleiner gleich 0,3 x Radius (r1) ausgebildet ist.

## Claims

1. Chain lock (100) comprising two lock halves (1), wherein each lock half (1) is formed from an elongate body (2) having an end-side coupling section (K), relative to which a locking pin (4) protrudes and on the side of the body (2) opposite the locking pin (4) a protruding cam (3) is arranged, wherein the cam (3) of a lock half (1) positively engages in a pocket (11) on the locking pin (4) of the opposite lock half (1), wherein tensile forces engaging with the chain lock (100) may be introduced via the cam (3) into the pocket (11) of the respective other lock half (1), **characterised in that** an undercut(13) is formed in the pocket (11).

2. Chain lock according to claim 1, **characterised in that** the pocket (11) runs U-shaped or V-shaped from one side (18) of the lock half (1) to the opposite side (19), wherein the undercut (13) extends over the entire U-shape or V-shape or the undercut (13) is progressively formed coming from each side (18, 19) towards a central longitudinal axis (22).

3. Chain lock according to claim 1, **characterised in that** the undercut (13) has a radius (r1), with which it is formed in the direction of the locking pin (4), wherein the radius (r1) of 1 mm to 6 mm, preferably of 2.5 mm to 4.5 mm is formed.

4. Chain lock according to claim 3, **characterised in that** coming from an upper end (5) of the locking pin (4) a radius (r2) is formed, which then passes into the opposite radius (r1), wherein the radius (r2) is greater than 0 mm and less than or equal to 0.3 x radius (r1).

5. Chain lock according to claim 3 or 4, **characterised in that** the radius (r1) is formed with a depth (t) in the direction of the locking pin (4), wherein the depth (t) is formed preferably greater than 0 mm and less than or equal to the radius (r1) in particular less than or equal to 0.3 x radius (r1).

## Revendications

1. Maillon de chaîne (100) avec deux moitiés de maillon (1), dans lequel chaque moitié de maillon (1) est formée d'un corps allongé (2) avec section d'accouplement côté extrémité (K), à l'endroit duquel une broche de verrouillage (4) fait saillie et un ergot saillant (3) est agencé sur le côté du corps (2) opposé à la broche de verrouillage (4), dans lequel l'ergot (3) d'une moitié de maillon (1) vient en prise par complémentarité de forme dans une poche (11) au niveau de la broche de verrouillage (4) de la moitié de maillon (1) opposée, dans lequel des forces de traction s'appliquant sur le maillon de chaîne (100) peuvent être introduites dans la poche (11) de respectivement l'autre moitié de maillon (1) par le biais de l'ergot (3), **caractérisé en ce qu'**une rainure de dégagement (13) est réalisée dans la poche (11).

2. Maillon de chaîne selon la revendication 1, **caractérisé en ce que** la poche (11) s'étend en forme de U ou en forme de V d'un côté (18) de la moitié de maillon (1) au côté opposé (19), dans lequel la rainure de dégagement (13) s'étend sur l'ensemble de la forme en U ou de la forme en V ou la rainure de dégagement (13) est réalisée de manière croissante venant de chaque côté (18, 19) vers un axe longitudinal médian (22).

3. Maillon de chaîne selon la revendication 1, **caractérisé en ce que** la rainure de dégagement (13) présente un rayon (r1), avec lequel elle est réalisée en direction de la broche de verrouillage (4), dans lequel le rayon (r1) est réalisé de 1 mm à 6 mm, de préférence de 2,5 mm à 4,5 mm.

4. Maillon de chaîne selon la revendication 3, **caractérisé en ce qu'**un rayon (r2) venant d'une extrémité supérieure (5) de la broche de verrouillage (4) est réalisé, qui passe alors dans le rayon opposé (r1), dans lequel le rayon (r2) est supérieur à 0 mm et est inférieur ou égal à 0,3 x le rayon (r1).

5. Maillon de chaîne selon la revendication 3 ou 4, **caractérisé en ce que** le rayon (r1) est réalisé avec une profondeur (t) en direction de la broche de verrouillage (4), dans lequel la profondeur (t) est réalisée de préférence supérieure à 0 mm et inférieure ou égale au rayon (r1), en particulier inférieure ou égale à 0,3 x le rayon (r1).
